(19) Europäisches Patentamt
European Patent Office
Office européen des brevets

(11) EP 0 727 402 A1

(12) **EUROPEAN PATENT APPLICATION**
published in accordance with Art. 158(3) EPC

(43) Date of publication:
**21.08.1996 Bulletin 1996/34**

(21) Application number: **95918797.2**

(22) Date of filing: **12.05.1995**

(51) Int. Cl.$^{6}$: **C05F 11/02**, A01N 61/00, C09K 17/00

(86) International application number:
**PCT/RU95/00088**

(87) International publication number:
**WO 95/33702 (14.12.1995 Gazette 1995/53)**

(84) Designated Contracting States:
**AT BE CH DE DK ES FR GB GR IE IT LI LU MC NL PT SE**

(30) Priority: **09.06.1994 RU 94019460**

(71) Applicant: **AKTSIONERNOE OBSCHESTVO ZAKRYTOGO TIPA "SPETSIALNYE BIOLOGICHESKIE TEKHNOLOGII"**
**Moscow, 117463 (RU)**

(72) Inventor: **SHULGIN, Alexandr Ivanovich**
**Moscow, 117463 (RU)**

(74) Representative: **W.P. THOMPSON & CO.**
**Coopers Building,**
**Church Street**
**Liverpool L1 3AB (GB)**

# (54) WATER-SOLUBLE HUMIC ACIDS, A METHOD OF OBTAINING THEM, A METHOD OF DETOXIFYING LAND AND EFFLUENT SEDIMENTS, AND A METHOD OF RECULTIVATING AGRICULTURAL LAND WITH THE AID OF THE PROPOSED WATER-SOLUBLE HUMIC ACIDS

(57) The method for detoxication of sewage sediment containing heavy metal cations, comprises adding to the mentioned sewage sediment under constant stirring, the mentioned novel humic water-soluble humic acids in an amount found from the following formula:

$$M \geqq \frac{q \times m}{a \times G} \times 100\%,$$

where:

- M is the weight of humic acids, kg,
- q is the content of mobile cations of heavy metals in sewage sediment, mg x eq/kg,
- m is the weight of the sewage sediment subjected to detoxication, kg,
- a is an exchange capacity of the humic acids used, in terms of cations of heavy metals, mg x eq/kg,
- G is the concentration of humic acids, wt.%,

The result is the formation of water-insoluble compounds of humic acids with ions of heavy metals present in the sewage sediment, thus ensuring detoxication of the sewage sediment.

EP 0 727 402 A1

## Description

### Technical Field

The invention relates in general to producing the products of chemical processing of solid combustible minerals, more specifically to producing humic acids, and has particular reference to water-soluble humic acids, a process for producing same, a method for detoxifying lands and sewage sediment and a method for reclaiming agricultural lands, carried out using said water-soluble humic acids.

### Background Art

Humic acids, as being the base of earth humus and the decisive factor of soil fertility, perform accumulating functions, that is, they accumulate in soil the most important nutrient elements for soil biota and plants, contribute to decomposition of natural and synthetic materials, protect microflora and plants against the effect of adverse factors, and produce a stimulating effect on their growth and development. Thus, said acids can form stable water-insoluble compounds with ions of heavy metals and with other harmful environmental pollutants. Humic acids, however, possess but a low activity when in their initial natural state,due to a low degree of hydration and dispersity and their active centers being blocked with diverse components, mineral inclusive.

It is common knowledge that, with due account of a complex of valuable properties possessed by humic acids, use is made for solving various problems of ecology, agriculture, and industry, of the products of processing diverse solid combustible minerals, such as peat, oxidized coal, brown coal. Such products, however, contain a considerable proportion of foreign admixtures, which restricts badly the field of their application, especially for solving ecological problems.

In order to detoxify sewage sediment, an organic substance, that is, peat is added thereto; however, peat binds but weakly the ions of heavy metals. Therefore, the proportion of said organic substance which is to be introduced into sewage sediment is so high that the ratio between organic substance and sewage sediment equals 2:1. This in turn involves much expenses for peat extraction and transportation. Moreover, safe concentrations of mobile heavy metal ions as prescribed by the standards of maximum allowable concentrations cannot be attained, the sediment remains toxic and cannot be used for recovery, thus being great environmental hazards after having been deposited.

It is common knowledge that humic acids occur naturally as water-insoluble substances and are extracted from soil, peat, brown and oxidized coal by rendering said substances into humates, that is, water-soluble salts of monovalent cations (those of sodium, potassium, and ammonium) which is attained by treating the original stock with an appropriate alkaline solution or with organic bases. Humic acids being high-molecular substances, they occur in the humate form as solutions approximating the true ones. When hydrogen ions substitute for monovalent cations in the molecules of humates, which is attained by acidifying an alkaline medium to the pH value of 2 - 3, humic acids resume their initial form to establish a water-insoluble phase appearing as colloids that coagulate to form jellylike precipitates, pH values of about 2 or 3 correspond to the coagulation point at which colloids undergo irreversible coagulation and humic acid molecules are polymerized. As a result, the reaction centers of the humic acids are blocked, the interphase area is badly reduced, and their physicochemical and biological activity is adversely affected.

There has been developed a process for producing water-soluble humates, that is, the salts of monovalent cations of humic acids, from solid combustible minerals, said humates being used for producing regulators of plant growth and development. The aforesaid process comprises disintegration of the parent stock (peat or coal), oxygen-oxidizing of said stock, treatment with an extractant (an alkaline solution) under mechanical stirring, separation of the solid and liquid phases, and drying of the latter phase (cf. Patent Application of the Russian Federation No. 5,007,042/05/074,452).

As a result of treatment of the parent stock with an alkaline extractant, the humic acids, contained therein are passed into solution as the salts of monovalent cations, that is, potassium humate, sodium humate, or ammonium humate, respectively when used as said extractant is a potassium or sodium solution, ammonia liquor, or organic bases.

It is however due to a long duration of the process that low-molecular fractions of humic acids and fulvic acids are predominantly extracted from the parent stock, and the stock particles are liable to swell, the resultant mass is very hardly amenable to separation into a solid and a liquid phase. All this is responsible for a low efficiency and output, and high specific power consumption of the process. But the principal disadvantage of the process resides in the fact that it is capable of producing only water-soluble salts of humic acids. Presence of the opposite-charged ions of potassium, sodium, or ammonium in the molecules of humates limits the field of application of said humates to plant growth and development regulators, wherein they are used in low concentrations (0.005 - 0.01%). When applied in higher concentrations (over 1%) the humates produce a phytotoxic effect, being therefore inapplicable as sorbents,ameliorants, and soil-treatment chemicals.

Application of humic acids even in considerable amounts with a view to soil detoxicating and reclaiming, unlike humates, causes no adverse effect on growth and development of plants because it is the presence of humic acids in soil that determines its fertility. However, the heretofore known humic acids are inapplicable due to their low activity and reactivity, as well as on account of absence of efficient techniques of their production.

Humic substances are known to be applied to soil as the components of disintegrated peat, brown coal with the purpose of soil reclaming. (SU, A, 1,491,362). This, however, is accompanied by soil pollution with ballast substances and harmful components, which substantially affects the end effect. Furthermore, low sorption capacity and insolubility of such products render their application difficult and low-effective, and requires high rates of application.

No water-soluble humic acids have been known heretofore.

Disclosure of the Invention

The present invention has for its principal object to make it possible, by providing novel water-soluble humic acids under modified process techniques, and using said novel water-soluble humic acids, to detoxify lands and sewage sediment, and to recultivate agricultural lands containing toxic substances.

The aforesaid object is accomplished due to the fact that, according to the present invention, provision is made for water-soluble humic acids having an average molecular weight of 5000 - 100000, the pH value and the moisture content of said humic acids being in the following interrelationship:

$$W \geqq 100 - 25\,(pH - 2),$$

where

$$2 < pH \leqq 6;$$

W - moisture content of water-soluble humic acids.

It is due to the present invention that there is provided the product unique as to its properties and fields of application, namely, free water-soluble humic acids in the form of reversible colloidal systems in a viscoplastic or loose (granular) state, said acids when diluted with water forming stable homogeneous systems having high absorption and reaction capacity.

According to the present invention, it is expedient to produce water-soluble humic acids using a process consisting in that the starting humates and/or water-insoluble humic acids are subjected to hydration, whereupon cations and surplus hydrogen ions are removed therefrom, while keeping with the correspondence of the values of the end product and the concentration of humic acids therein to the expression that follows:

$$G \leqq 25\,(pH - 2),$$

where

$$2 < pH \leqq 6;$$

G - concentration of humic acids, wt.%;

it is expedient that the starting products be subjected to hydration at a temperature below 100°C.

According to the present invention, when producing water-soluble humic acids from the starting humates, it is expedient that the latter be subjected to hydration by dissolving them in water, whereupon cat ions be replaced in the resultant solution by hydrogen ions; removal of cations is reasonable to be effected by exposing solutions of humates to ion exchange in the presence of a cation-exchange resin (cationite), which makes it possible to obtain extra-pure water-soluble humic acids.

To carry out industrial-scale production of water-soluble humic acids, it is expedient to remove cations by exposing humate solutions to electrodialysis, using ion-selective and semipermeable membranes.

According to the present invention, when producing water-soluble humic acids from the starting humic acids, it is expedient to expose the latter to hydration under vigorous stirring accompanied by removal of surplus hydrogen ions.

It is expedient that land detoxication be carried out using a method, comprising application of humic substances to a land contaminated with toxic and radioactive substances; according to the invention, used as said humic substances are water-soluble humic acids having an average molecular weight of 5000 - 100000, the pH value and the moisture content of said acids being in the following interrelationship:

$$W \geqq 100 - 25\,(pH - 2),$$

where

W - moisture content of water-soluble humic acids, wt.%,

$$2 < pH \leqq 6,$$

while adhering to that the values of the weight and moisture content of the land being detoxicated and those of the humic acids being applied should satisfy the following condition;

$$100 - \left( \frac{M\,W + m^1 W^1}{M + m^1} \right) \leqq 25\,(pH - 2),$$

where

M - weight of humic acids, kg;
W - moisture content of humic acids, wt.%;
$m^1$ - weight of the land being detoxicated, kg;

and

$W^1$ - moisture content of the land being detoxicated, wt.%,

the pH value being in the following range:

$$2 < pH \leqq 6,$$

followed by formation of water-insoluble complexes of toxic and radioactive substances, contained in the land being treated, with the humic acids being applied, thus detoxicating said land.

It is due to the present invention that lands polluted with toxic substances become again suitable for agricultural use. Crop-producing power of lands subjected to detoxication is much increased, and the content of toxic substances in the agricultural produce yielded by such lands is maintained within the existing sanitary standards.

It is expedient that detoxication of sewage sediment be carried out by a method, comprising adding, under constant stirring, of humic substances to sewage sediment containing cations of heavy metals; according to the invention, used as said humic substances are water-soluble humic acids having an average molecular weight of 5000 - 100000, the pH value and the moisture content of said acids being in the following interrelationship:

$$W \geqq 100 - 25\,(pH - 2),$$

where

$$2 < pH \leqq 6,$$

W - moisture content of water-soluble humic acids, wt.%,

the amount of said water-soluble humic acids being added is as follows:

$$M \geqq \frac{q \times m}{a \times G},$$

where:

M is the weight of humic acids, kg,
q is the content of mobile cations of heavy metals in sewage sediment, mg x eq/kg,
m is the weight of the sewage sediment subjected to detoxication, kg,
a is an exchange capacity of the humic acids used, in terms of cations of heavy metals, mg x eq/kg,
G is the concentration of humic acids, wt.%,

resulting in formation of water-insoluble compounds of ions of heavy metals present in the sewage sediment, with said humic acids, said compounds ensuring detoxication of sewage sediment. It is due to the present invention that sewage sediment subjected to the proposed detoxication can be utilized for agricultural activity of man, in particular, as organomineral fertilizers in crop production. In this case, the heavy metal content of cultivated agricultural products and of ground water remains in the limits of the now-existing sanitary standards.

It is expedient that recultivation of agricultural lands be carried out using a method which comprises applying humic substances to soils contaminated with toxic substances, wherein, according to tile invention, used as the humic substances are water-soluble humic acids having an average molecular weight of 5000-100000, the pH value and the moisture content of said acids being in the following interrelationship:

$$W \geqq 100 - 25\,(pH - 2),$$

where

$$2 < pH \leqq 6,$$

W - moisture content of water-soluble humic acids, wt.%,

the pH value of the humic acids applied satisfies to the following condition:

$$pH \geqq \frac{100 - W^{1}}{25} + 2,$$

where

$W^1$ - moisture content of the agricultural lands being recultivated, wt.%,

followed by formation of water-insoluble complexes of toxic substances contained in the lands involved, with the humic acids being applied, thus reclaiming said lands.

Further objects and advantages of the present invention will become evident from the following detailed description of the herein-disclosed water-soluble humic acids, a process for their production, methods for land detoxication and recultivation of agricultural lands carried out with the aid of said humic acids, as well as of specific embodiments of producing said water-soluble humic acids and exemplary land and sewage sediment detoxication and land recultivation.

Best Method of Carrying Out the Invention

The water-soluble humic acids disclosed herein are in fact a complicated mixture of naturally occurring organic substances resulting from decomposition of died-off plants and their humifaction. According to the present invention, humic acid soluble in water have an average molecular weight of 5000 - 100000, and the value of their pH and moisture content must be in the following interrelationship:

$$W \geqq 100 - 25\,(pH - 2),$$

where

W - moisture content of water-soluble humic acids, wt.%;

$$2 < pH \leqq 6.$$

The proposed water-soluble humic acids have principally the following average physicochemical characteristics:

| Nos | Name of characteristics | Unit of measurement | Rating |
|---|---|---|---|
| 1 | 2 | 3 | 4 |
| 1 | External appearance | | Dark-brown colloidal substance |
| 2 | Weight content of moisture | % | 95 max. |
| 3 | Weight content of humic acids | % in terms of dry matter | 95 min. |
| 4 | pH value of the end product | - lg $CH^{+}$ (g-ion/l) | 2.0-6.0 |
| 5 | Exchange capacity with respect to $Ba^{++}$ ions (content of active groups) | mg-eq/g | 6.5 min. |
| 6 | Exchange capacity with respect to $Ca^{++}$ ions (content of carboxy groups) | mg-eq/g | 2.5 min. |
| 7 | Ash content | % in terms of dry matter | 8 max. |
| 8 | Molecular weight (average as to specimen) | | 5000 - 100000 |

According to the present invention, the aforesaid water-soluble humic acids can be produced as follows.

Starting humates and/or water-insoluble humic acids obtained from diverse solid combustible minerals (such as peat, oxidized coal, or brown coal) with the aid of alkaline extraction are exposed, according to the process proposed herein, to hydration at a maximum temperature of 100°C, whereupon cations and surplus hydrogen ions are removed from said humates. According to the invention, it is necessary to observe that the pH value of the end product obtained and concentration of humic acid therein should satisfy the following condition:

$$G \leq 25 (pH - 2).$$

where

G - concentration of humic acids, wt.%,

$$2 < pH \leq 6.$$

The condition mentioned above provides for production of water-soluble humic acids that retain a highly disperse hydrated structure characteristic of water-soluble humates.

As can be seen from the afore-stated relationship, the lower the pH value of the medium the greater must be the degree of hydration of humic acids in order that they may remain as reversible water-soluble colloids. And conversely, the higher the pH value the lower amount of water can be contained in humic acids for retaining their water-soluble state.

When using humates as the starting products they are subjected, according to the invention, to hydration, after which cations are removed from the resultant solution and replaced by hydrogen ions. According to the invention, in order to obtain extra-pure water-soluble humic acids, cations are removed by exposing the solutions of humates to ion exchange in the presence of a cation-exchange resin (cationite).

Used as said cation-exchange resin may be slightly acidic cationites having an exchange capacity on the order of 5 mg eq/g or more of a dry ionite having sulfo or carboxy groups as a functional group (radical).

According to the invention, for industrial producing of water-soluble humic acids, it is expedient that cations be removed during the process of electrodialysis of humate solutions, making use of both ion-selective and semipermeable membranes.

According to the present invention, when using water-insoluble humic acids as the starting products, the latter are subjected to hydration under vigorous stirring with simultaneous removal of surplus hydrogen ions.

The process for producing the herein-proposed humic acids capable of dissolving in water, is conducted at maximum temperature of 100°C, preferably at a temperature of from plus 10° to plus 95°C. At temperature above 100°C there occurs partial destruction of molecules resulting in a loss, to a great extent, of the growth-stimulating properties of the humic acids involved.

The process proposed herein is instrumental in producing humic acids having a high disperse hydrated structure possessing high physicochemical, biological, and physiological activity. The resultant compounds are ecologically pure and safe organic substances which possess a stable ability to chemically bind cat ions of heavy metals, such as zinc, cadmium, lead, mercury, copper, and nickel, as well as radionucleides and some other toxic and harmful substances to form water-insoluble compounds, thus preventing said substances against getting in plants and phreatic water.

According to the present invention there is developed a method for detoxication of lands polluted as a result of technogenic human activity, e.g., dump areas of metallurgical and mining enterprises, city and industrial disposal areas and dumping grounds; lands contaminated as a result of discharges of radioactive elements and toxic substances. The proposed method prevents diverse toxic and radioactive substances from getting in plants and phreatic water and provides for structural improvement of lands, increased water capacity and higher soil productivity.

A method for land detoxication, according to the invention, comprises application or the water-soluble humic acids described above, to the land under threatment. While so doing the values of the weight and moisture content of the lands being detoxicated and those of the humic acids applied should satisfy the following condition:

$$100 - \left( \frac{M\,W + m^1\,W^1}{M + m^1} \right) \leq 25\,(pH - 2),$$

where

- M - weight of humic acids, kg;
- W - moisture content of humic acids, wt.%;
- $m^1$ - weight of the land being detoxicated, kg;

and

- $W^1$ - moisture content of the land being detoxicated, wt.%,

the pH value being in the following range:

$$2 < pH \leq 6.$$

Such a treatment results in formation of water-insoluble complexes of toxic and radioactive substances contained in the land being treated, with the humic acids applied, whereby the required land detoxication is attained.

One of the sources of ash contamination of lands with ions of heavy metals is sewage sediment which are deposited on specially allotted land areas.

According to the present invention, the developed detoxication method makes it possible to render sewage sediment into substances utilizable in agricultural activity of man, e.g., for crop production.

Sewage waters, including industrial municipal sewage, which contain a great proportion of toxic substances, are preliminarily subjected to separation, using various heretofore-known techniques, into a solid and a liquid phase, followed by concentration of the solid phase, which is in fact the sewage sediment containing a great amount of cations of heavy metals, such as zinc, chromium, copper, nickel, lead, mercury, arsenic, and cadmium.

The method proposed herein consists in that the aforementioned water-soluble humic acids are added, under constant stirring, to a sewage sediment in an amount calculated from the following formula:

$$M \geq \frac{q \times m}{a \times G},$$

where:

- M is the weight of humic acids, kg,
- q is the content of mobile cations of heavy metals in sewage sediment, mg x eq/kg,
- m is the weight of the sewage sediment subjected to detoxication, kg
- a is an exchange capacity of the humic acids used, in terms of cat ions of heavy metals, mg x eq/kg,
- G is the concentration of humic acids, wt.%.

Water-soluble humic acids form, together with ions of heavy metals contained in the sediment under treatment, water-insoluble compounds, thus detoxifying said sediment.

Thus, water-soluble humic acids are added to sewage sediment in an amount determined by the sorption capacity and the proportion of toxic components contained in the sediment. Water-soluble humic acids chemically bind cations of heavy metals, while passing into a water-insoluble form accompanied by formation of spatial molecular-colloidal water-insoluble structures.

Sewage sediment treated, according to the invention, with humic acids contains all toxic substances present therein in a chemically bound form appearing as water-insoluble substances. That is why penetration of said toxic substances into ground water and plants is ruled out.

Sewage sediment that are detoxified in accordance with the present invention, are suitable for subsequent reclaiming or depositing in, e.g., agriculture as organomineral fertilizers with a view to increasing the yield of farm crops and to enhancing soil fertility.

When recultivating agricultural lands, that is, lands that have been withdrawn from crop rotation cycle due to their having been polluted with technogenic products, and saline soil (solonchak) use is made of the herein-proposed water-soluble humic acids the pH value of which is to satisfy the following condition:

$$pH \geqq \frac{100 - W^1}{25} + 2 .$$

After having been applied to soil the present water-soluble humic acids start to react, due to their high specific surface, with toxic substances, e.g., ions of heavy metals, so as to bind them and to pass to a water-insoluble form. As is evident from the aforestated, the pH values of humic acids are to be corrected with due account of the soil moisture content ($W^1$). For instance, when the soil features a low moisture content the pH value of humic acids is to be increased in order that after having been applied to the soil the humic acids would not subjected to irreversible coagulation till the completion of the reactions of binding the ions of heavy metals and formation of water insoluble complexes.

When treating saline soil containing great concentrations of $Ca^{+2}$ and $Mg^{+2}$ ions, or featuring an alkaline or strongly alkaline reaction, the applied water-soluble humic acids not only binds surplus ions but also normalize the pH value of the soil, thus restoring its fertility.

Thus, ions of heavy metals are prevented from getting to plants and phreatic water due to their having been chemically bound and fixed in the soil as water-insoluble compounds, whereby soil detoxication is attained, as well as a possibility of using polluted lands for agricultural activity.

Furthermore, the soil moisture content is increased and its structure is improved due to high hydrophilic nature of humic acids. Additional application of humic acids adds to soil fertility and increases the yielding capacity of farm crops.

To promote understanding of the present invention given below are the following exemplary embodiments thereof.

To carry into effect the process for producing water-soluble humic acids use is made of the following equipment: crushing mill, extractor, sedimentation filter, column packed with granules, of ion-exchange cationite, three-chamber diaphragm electrolyzing cell, two-chamber electrolyzing cell, and acoustic-vibration disperser. Used as the starting material are brown coal, oxidized coal, and peat.

The starting raw stock was disintegrated till a particle size of 0.25 - 3 mm and treated in an extracter with a one-percent solution of sodium and potassium alkali, ammonium liquor, and an organic base. The result was a suspension whose liquid phase was essentially a solution of the salt of a monovalent cation, that is, sodium humate, potassium humate, ammonium humate, and humate of an organic base, respectively, whereas the solid phase of the suspension appeared as the ash component of the coals. The solid and liquid phases were separated in a sedimentation filter. The solid phase was in fact the waste product of the process, while the liquid phase was the parent product for producing water-soluble humic acids therefrom.

Example 1

A 5-percent concentration sodium humate solution is passed through a column packed with a cationite containing as a principal function group the sulfo-group having an exchange capacity of 5.1 ml/eq per liter and rendered into the H-form, the pH values and the sodium ions content being controlled with the aid of a glass electrode and an ion-selective electrode. The process is stopped as soon as the solution leaving the column fetures the pH value of 5.5, the presence of significant quantities of sodium ions being not registered in said solution. The resultant solution is dried at 90°C, and a loose product is formed when the moisture content is 75%. With said pH and moisture content values the resultant humic acids retain their water solubility completely. The ash content of the end product is 5.4% (on dry matter), the molecular weight is 30000, the exchange capacity with respect to $Ba^{++}$ ions, 8.4 mg eq/g, that with respect to $Ca^{+++}$ ions, 3.1 mg eq/g, and the weight percent of an insoluble sediment is below one percent.

Example 2

A water-soluble humic acid is produced under the conditions similar to those of Example 1, the sole difference being in that the process is discontinued as soon as the outlet solution features the pH value of 3.5. Then the resultant solution is dried at 90°C till a moisture content of 75%, the values of the rest of the parameters of the end product being similar to those specified in Example 1.

Example 3

A sodium humate solution is fed to a three-chamber diaphragm electrolyzing cell, wherein used as an electrode material is graphite, two semipermeable partitions being made of a chlorinated fabric. Current density is from 0.04 to 0.07 A/cm$^2$ at a voltage of 40 - 68 V. The initial solution contains 0.126 g eq/l of sodium humate and 0.084 g eq/l of free alkali.

In the course of electrolysis sodium ions are transported to the cell cathodic zone and the medium is alkalized, whereas the anodic-zone medium is acidified. Samples of the solution are taken after each change in the pH value by unity, whereupon said samples are dried at 90°C until moisture content is reduced from 96 wt.% to 10 wt.%. Then there is found the moisture value W corresponding to the pH value and at which humic acid passes into a water-insoluble form. The results obtained are presented in Table 1 below.

Table 1

| pH | 3 | 4 | 5 | 6 |
|---|---|---|---|---|
| W, wt.% | 99 | 80 | 60 | 45 |

The resultant product appears as a dark-brown colloidal substance having a molecular weight of 5700, ash content 6% (on dry matter), an insoluble sediment is not in excess of 1 wt.%.

Example 4

A 10-percent ammonium humate solution is fed to a diaphragm electrodialyzer, wherein ammonium ions are transported to its cathodic zone under the action of a constant electric field. Ammonia formed in the apparatus is eliminated by blowing its interior with compressed air. Current density is within 0.01 and 0.05 A/cm$^2$. The end of the treatment process is judged by ceasing of ammonia evolution. The pH value of a treated solution is between 5.2 and 5.6. When drying the resultant solution at 90°C a water-soluble loose product is formed at W = 53 wt.%. The resultant dark-brown colloidal substance has a molecular mass of 30000, ash content (on dry matter) of about 2.5%, exchange capacity with respect to $Ba^{++}$ ions of 8.4 mg eq/g, that with respect to $Ca^{++}$ ions of 3.1 mg eq/g, the weight percent of an insoluble sediment being below one percent.

Example 5

Water-insoluble humic acids that have been produced by coagulation and precipitation with the pH value of the solution of their salts reduced to 3, are subjected to two-fold washing with water. As a result, the pH value of the medium is increased to 4.8 - 5.0, after which the starting humic acids are additionally hydrated in an acoustic-vibration disperser, thus acquiring the ability to spontaneously form stable solutions upon being water-diluted. The resultant dark-brown colloidal product has an average molecular weight of 98000, its ash content being 7.9% on dry matter, and exchange capacity with respect to $Ba^{++}$ and $Ca^{++}$ ions, 8.3 and 3.7 mg eq/g, respectively.

Example 6

Soddy podzolic soil having the pH value of 6.1 and moisture content of 52 wt.% and containing heavy metals in an amount exceeding the maximum allowable concentration, is treated with the herein-proposed water-soluble humic acids having the pH value of 5 and a moisture content of 60 wt.% and produced under the conditions similar to those of Example 4. The amount of said acids applied to the soil is determined depending on the content of the mobile ions in the soil, for which purpose a soil sample is water-extracted, whereupon the content of mobile ions in water is determined, as well as the surplus $Zn^{+2}$ and $Ni^{+2}$ ions. A total amount of said ions in the soil sample is also determined. An amount of the sorbent applied that is, water-soluble humic acids is determined according to a total amount of said ions in the soil and taking into account the sorption capacity of said humic acids equal to 8 mg eq/g. Soil treatment is carried out in the spring time simultaneously with application of liquid fertilizers to the soil. Then spring wheat is grown in the treated and control soil areas, and the content of said metals in the soil, grain, and straw is determined. The content of heavy metals in the soil of the treated areas is reduced 7 - 10 times to become lower than the values of the maximum allowable concentration.

Example 7

Light loam having the pH value of 5.2 and a moisture content of 63%, containing supernormal amount of heavy metals $Zn^{+2}$ and $Cd^{+2}$ is treated, under the conditions similar to those of Example 6, with a water-soluble humic acid having the pH value of 4 and a moisture content of 75% and produced under the conditions of Example 4. The results of soil treatment with said humic acid are assessed as specified in Example 6. There is noticed a reduced content of the ions of heavy metals in the crop products below the maximum allowable concentration values.

Example 8

Disposal areas containing, as a pollutant, copper ash as the waste product of copper production processes, are treated with the proposed water-soluble humic acids produced under the conditions similar to those of Example 4, with a view to binding copper ions and forming the soil surface layer. An average copper content of the soil is 0.8 - 1 g/kg, the soil pH value being 4.5. The water-soluble humic acids are applied to the soil at a rate of 23 g per kg of the dump earth, the pH value and moisture content of the acids being 4.5 and 25%, respectively, and the moisture content of the dump earth is 60%. A month after the treatment the dump area is seeded with monocotyledonous forage grasses. Upon completion of the vegetation period there are assessed the degree of cover of the dump soil surface with the growing grasses, the effect of excess copper upon the growth of the grasses, including the presence of the corresponding characteristic morphological characters (chlorosis, marginal necrosis of the leaves, pigmentation), the results of the assessment being as follows: the percent of grass cover is 95 + 1, whereas that of the dump soil surfaces untreated with the water-soluble humic acids is as low as 50 - 55; the grasses are normally developed, no symptoms of intoxication with surplus copper ions appear.

Example 9

The area of a city dumping ground containing construction and industrial waste products contaminated with $Cr^{+3}$ and $Hg^{+2}$ ions is treated, with a view to binding said contaminants and forming the soil surface layer, with a water-soluble humic acid having the pH value of 5.5 and a moisture content of 60% and produced as specified in Example 1. The moisture content of the matter being treated is 45%, the amount of the humic acid applied per kg of garbage is 100 g. The treatment results are assessed against the content of the ions of heavy metals in samples of rain water taken in the dumping ground area for one year. Measurements taken demonstrate a reduced content of the ions of heavy metals down to the MAC level.

Example 10

Sewage sediment (SS) has an initial moisture content of 81% with pH = 6.8. Heavy metal content in terms of dry matter is as follows: zinc, 7894 mg/kg; copper, 1732 mg/kg; chromium, 329.3 mg/kg; nickel, 325 mg/kg. A total content of heavy metal cations is 171 mg x eq/kg.

Use is made of the water-soluble humic acids similar to those obtained in Example 4.

There is studied penetration of heavy metal ions from soil containing sewage sediment, into plants. The following specimens are used as the subjects of studying:

1. Soddy podzolic soil (Control 1).
2. Sewage sediment (SS) (Control 2).
3. SS + humic acids No.1 (1.5%) - sewage sediment having a 1.5% content of free humic acids.
4. SS + humic acids No.2 (5%) - sewage sediment having a 5% content of free humic acids.
5. SS + humic acids No.3 (15%) - sewage sediment having a 15% content of free humic acids.
6. SS + soil (1:1) - sewage sediment mixed with soil (1:1).
7. SS, humic acids No.1 + soil (1:1) - sewage sediment having a 1.5% content of humic acids, mixed with soil (1:1).
8. SS, humic acids No.2 + soil (1:1) - sewage sediment having a 5% content of humic acids, mixed with soil (1:1).
9. SS, humic acids No.3 + soil (1:1) - sewage sediment having a 15% content of humic acids, mixed with soil (1:1).
10. SS + soil (1:10) - sewage sediment mixed with soil (1:10).
11. SS, humic acids No.1 + soil (1:10) - sewage sediment having a 1.5% content of humic acids, mixed with soil (1:10).
12. SS, humic acids No.2 + soil (1:10) - sewage sediment having a 5% content of humic acids, mixed with soil (1:10).
13. SS, humic acids No.3 + soil (1:10) - sewage sediment having a 15% content of humic acids, mixed with soil (1:10).

Barley is grown on said specimens.

Once the crop has been grown, the content of heavy metal ions of the plants is determined, using the spectral emission method with argon plasma. There are determined the content of principal toxicants, i.e., cadmium, zinc, nickel, and chromium, which are most intensely absorbed by cereal crops. The results are tabulated in Table 2 below.

Table 2

| Nos | Test variants | Cd | Zn | Ni | Cr |
|---|---|---|---|---|---|
| | | mg/kg of dry matter | | | |
| 1 | Soil (Control 1) | 0.71 | 62 | 1.4 | 0.97 |
| 2 | SS (Control 2) | 1.33 | 157 | 3.6 | 1.5 |
| 3 | SS + humic acids No.1 | 1.31 | 148 | 2.5 | 1.4 |
| 4 | SS + humic acids No.2 | 0.65 | 90 | 1.2 | 0.95 |
| 5 | SS + humic acids No.3 | 0.75 | 103 | 0.6 | 0.89 |
| 6 | SS + soil (1:1) | 1.11 | 128 | 3.8 | 1.24 |
| 7 | SS, humic acids No.1 + soil (1:1) | 1.09 | 142 | 2.3 | 1.34 |
| 8 | SS, humic acids No.2 + soil (1:1) | 1.08 | 106 | 1.7 | 1.31 |
| 9 | SS, humic acids No.3 + soil (1:1) | 0.49 | 78 | 1.3 | 1.30 |
| 10 | SS + soil (1:10) | 1.22 | 96 | 2.5 | 1.60 |
| 11 | SS, humic acids No.1 + soil (1:10) | 1.14 | 110 | 1.7 | 1.56 |
| 12 | SS, humic acids No.2 + soil (1:10) | 1.04 | 92 | 2.2 | 1.50 |
| 13 | SS, humic acids No.3 + soil (1:10) | 0.74 | 84 | 1.2 | 1.30 |

As can be seen from Table 2, treatment of sewage sediment with the proposed humic acids provides for a considerable reduction of cadmium, zinc, and nickel content of the plants grown. The chromium content decreases down to the background value with a maximum concentration of humic acids.

Experiments on extraction of heavy metals from sewage sediment treated with humic acids, with the aid of the following extractants: 1N ammonium chloride solution, 0.01N ammonium chloride solution, 1N sulfuric acid solution, and an ammonium-acetate buffer (pH = 4.8) have demonstrated that the higher the concentration of humic acids in sewage sediment the lower the amount of washed out heavy metal ions.

Mixing sewage sediment treated with humic acids, with soil (1:10) adds to the crop yield by 48-75%.

Example 11

In field experiments an estimated amount of water-soluble humic acids for treating municipal sewage sediment is 20 g/kg. The sediment and the humic acids are mixed together in drum mixers, and the mixture is supplied to the fields as a presowing organic dressing applied in an amount of 20 ton/ha, using disk spreaders. The sown areas are used for growing spring wheat. As a result of application of such an organic dressing the crop yield is increased up to 2.8 ton/ha compared with 1.6 ton/ha in the control. The heavy metal content of the grain and straw has been analyzed after termination of the vegetation period, and that of ground water in a month after applying the treated sewage sediment. The results are presented in Table 3 below.

Table 3

| Object | Unit of measurement | $Zn^{+2}$ | $Cu^{+2}$ | $Cr^{+2}$ | $Ni^{+2}$ |
|---|---|---|---|---|---|
| Grain | mg/kg | 50 | 80 | 0 | 60 |
| Straw | mg/kg | 70 | 76 | 8 | 80 |
| Ground water | mg/l | 60 | 40 | 10 | 70 |

As can be seen from Table 3, the heavy metal content of plants and ground water in all cases does not exceed 76-80% of their maximum allowable concentration.

Industrial Applicability

The present invention will find application in environmental protection, in particular, for protection and reclamation of soil and contaminated lands, as well as for increasing soil fertility and amelioration of soil structure.

## Claims

1. Water-soluble humic acids, CHARACTERIZED in that they have an average molecular weight of 5000 - 100000, the pH and moisture values of which are in the following interrelation:

$$W \geqq 100 - 25\,(pH - 2),$$

where

$$2 < pH \leqq 6,$$

W - moisture content of water-soluble humic acids.

2. A process for producing water-soluble humic acids, CHARACTERIZED in that the starting products selected from the group, containing humates and water-insoluble humic acids, are subjected to hydration, whereupon cations and surplus hydrogen ions are removed from said starting products,while observing that the pH values of the resultant end product and the concentration of humic acids therein should satisfy the following condition:

$$G \leqq 25\,(pH - 2),$$

where

G - concentration of humic acids, wt.%;

$$2 < pH \leqq 6.$$

3. A process according to Claim 2, CHARACTERIZED in that the starting products are hydrated at a temperature below 100°C.

4. A process according to Claim 2, CHARACTERIZED in that the starting humates are hydrated by dissolving them in water, followed by removal of cations from the resultant solution and replacing them with hydrogen ions.

5. A process according to Claim 2, CHARACTERIZED in that the starting water-insoluble humic acids are hydrated under vigorous stirring with simultaneous removal of the surplus hydrogen ions.

6. A process according to Claims 2 and 4, CHARACTERIZED in that cations are removed by subjecting a solution of humates to ion exchange in the presence of a cation-exchange resin.

7. A process according to Claims 2 and 4, CHARACTERIZED in that cations are removed by subjecting solutions of himates to electrodialysis.

8. A process according to Claim 7, CHARACTERIZED in that electrodialysis is effected with the use of ion-selective membranes.

9. A process according to Claim 7, CHARACTERIZED in that electrodialysis is carried out with the use of semipermeable membranes.

**10.** A method for land detoxication, comprising applying humic substances to soils containing toxic and radioactive substances, CHARACTERIZED in that used as said humic substances are water-soluble humic acids having an average molecular weight of 5000 - 100000, the pH and moisture values of which are in the following interrelation:

$$W \geqq 100 - 25\,(pH - 2),$$

where

$$2 < pH \leqq 6;$$

W - moisture content of water-soluble humic acids;

while observing that the values of the weight and moisture of the land being detoxicated and those of the humic acids applied should satisfy the following condition;

$$100 - \left(\frac{M\,W + m^1\,W^1}{M + m^1}\right) \leqq 25\,(pH - 2),$$

where

M - weight of humic acids, kg;
W - moisture content of humic acids, wt.%;
$m^1$ - weight of the land being detoxicated, kg;

and

$W^1$ - moisture content of the land being detoxicated, wt.%,

the pH value being in the following range:

$$2 < pH \leqq 6.$$

resulting in formation of water-insoluble complexes of toxic and radioactive substances, contained in the land being treated, with the humic acids being applied, thus providing detoxication of the land being treated.

**11.** A method for detoxication of sewage sediment, comprising adding, under constant stirring, humic substances to sewage sediment containing cations of heavy metals, CHARACTERIZED in that used as said humic substances are water-soluble humic acids having an average molecular weight of 5000 - 100000, the pH and moisture values of which are in the following interrelation:

$$W \geqq 100 - 25\,(pH - 2),$$

where

$$2 < pH \leqq 6,$$

W - moisture content of water-soluble humic acids, wt.%

the amount of said water-soluble humic acids being added is as follows:

$$M \geqq \frac{q \times m}{a \times G},$$

where

M is the weight of humic acids, kg,
q is the content of mobile cations of heavy metals in sewage sediment, mg x eq/kg,
m is the weight of the sewage sediment subjected to detoxication, kg,

a is an exchange capacity of the humic acids used, in terms of cations of heavy metals, mg x eq/kg,
G is the concentration of humic acids, wt.%,

resulting in formation of water-insoluble compounds of ions of heavy metals present in the sewage sediment, with said humic acids, said compounds ensuring detoxication of sewage sediment.

**12.** A method for reclaiming agricultural lands, comprising applying humic substances to soils containing toxic substances, CHARACTERIZED in that used as said humic substances are water-soluble humic acids having an average molecular weight of 5000 - 100000, the pH and moisture values of which are in the following interrelation:

$$W \geqq 100 - 25\,(\,pH - 2),$$

where

$$2 < pH \leqq 6,$$

W - moisture content of water-soluble humic acids, wt.%;

the pH value of the applied humic acids is to satisfy the following condition:

$$pH \geqq \frac{100 - W}{25} + 2,$$

where

W [1]- moisture content of the agricultural land being recultivated, wt.%;

resulting in formation of water-insoluble complexes of toxic substances contained in the land, with the applied humic acids so as to provide land recultivation.

**INTERNATIONAL SEARCH REPORT**

International application No.
PCT/RU 95/00088

**A. CLASSIFICATION OF SUBJECT MATTER**

IPC$^6$: C05F 11/02, A01N 61/00, C09K 17/00

According to International Patent Classification (IPC) or to both national classification and IPC

**B. FIELDS SEARCHED**

Minimum documentation searched (classification system followed by classification symbols)

IPC$^6$: A01B 79/02, A01N 61/00, C02F 11/14, C05F 11/00, C05F 11/02, C09K 17/00

Documentation searched other than minimum documentation to the extent that such documents are included in the fields searched

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| A | EP, A1, 0117223 (LABORATORI FERRINI S.A.), 26 August 1984 (26.08.84) | 1-6 |
| A | SU, A1, 1697672 (IVANOV V.M. et. al), (15 December 1991 (15.12.91) | 1,2,7 |
| A | US, A, 4459149 (EDWARD F. MORAN et al.) 10 July 1984 (10.07.84) | 2 |
| A | US, A, 5248327 (NATIONAL ENERGY COUNCIL) 28 September 1993 (28.09.93) | 1,2,10,12 |
| A | SU, A1, 1525878 (TADZHIKSKY GOSUDARSTVENNY UNIVERSITET IM. V.I. LENINA), 15 January 1990 (15.01.90) | 1,2,10,12 |

[X] Further documents are listed in the continuation of Box C. [ ] See patent family annex.

* Special categories of cited documents:
"A" document defining the general state of the art which is not considered to be of particular relevance
"E" earlier document but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| 21 September 1995 (21.09.95) | 13 october 1995 (13.10.95) |
| Name and mailing address of the ISA/ RU | Authorized officer |
| Facsimile No. | Telephone No. |

Form PCT/ISA/210 (second sheet) (July 1992)

**INTERNATIONAL SEARCH REPORT**

International application No.
PCT/RU 95/00088

C (Continuation). DOCUMENTS CONSIDERED TO BE RELEVANT

| Category* | Citation of document, with indication, where appropriate, of the relevant passages | Relevant to claim No. |
|---|---|---|
| A | Khimizatsia Selskogo Khozyaistva, No.1, 1992, Kolos (Moscov), Trishina T.A., Ulyanov V.F. "Selskokhozyaistvennoe ispolzovanie OSV",pages 94-99 | 11 |
| A | "Effektivnost primeneniya osadka gorodskikh stochnykh vod i otkhodov gidrolizno-drozhzhevykh zavodov v selskom khozyaistve Moldavii", obzornaya informatsia, 1978, MoldNIINTI (Kishinev), pages 26-27 | 11 |
| A | GB, A, 1560467 (FRANK MANCHAK JR.), 06 February 1980 (06.02.80) | 11 |

Form PCT/ISA/210 (continuation of second sheet) (July 1992)